Europäisches Patentamt

**European Patent Office**

**Office européen des brevets**

(11) Veröffentlichungsnummer: **0 438 976 A2**

# EUROPÄISCHE PATENTANMELDUNG

(21) Anmeldenummer: **90811040.6**

(22) Anmeldetag: **28.12.90**

(51) Int. Cl.5: **B05B 7/14**, B05B 12/08

(30) Priorität: **24.01.90 CH 219/90**

(43) Veröffentlichungstag der Anmeldung:
**31.07.91 Patentblatt 91/31**

(84) Benannte Vertragsstaaten:
**AT CH DE DK FR GB IT LI NL**

(71) Anmelder: **Frei, Siegfried**
**Sammelbühlstrasse**
**CH-9053 Teufen(CH)**

(72) Erfinder: **Frei, Siegfried**
**Sammelbühlstrasse**
**CH-9053 Teufen(CH)**

(74) Vertreter: **Gachnang, Hans Rudolf**
**Badstrasse 5 Postfach 323**
**CH-8501 Frauenfeld(CH)**

(54) Verfahren und Vorrichtung zur Überwachung eines Pulverstromes in einer Pulverapplikationsanlage.

(57) Das erfindungsgemässe Verfahren zur Ueberwachung des Pulverstromes in der Förderleitung (15) einer Pulveraufbereitungsanlage besteht darin, einerseits das aus dem Pulverbehälter (1) abfliessende fluidisierte Pulver (3') festzustellen und andererseits das im Luftstrom der Pulverapplikationsvorrichtung zuströmende Pulverluftgemisch zu überwachen. Mit einer Auswerteelektronik (25) können die Geräusche an den beiden Messstellen miteinander verglichen und die entsprechenden Schlüsse über das Vorhandensein oder/und die Fördermenge von Pulver gezogen werden.

# VERFAHREN UND VORRICHTUNG ZUR UEBERWACHUNG EINES PULVERSTROMES IN EINER PULVERAPP-LIKATIONSANLAGE

Gegenstand der vorliegenden Erfindung ist ein Verfahren zur Ueberwachung eines Pulverstromes gemäss Oberbegriff des Patentanspruches 1. Gegenstand der Erfindung ist weiter eine Vorrichtung zur Ueberwachung eines Pulverstromes nach dem Oberbegriff des Patentanspruches 2.

Beim elektrostatischen Auftragen von Pulver auf die Oberfläche des zu beschichtenden Gegenstandes muss eine möglichst konstante Schichtstärke vorliegen, um einerseits einen einwandfreien Schutz des zu beschichtenden Körpers bzw. der zu beschichtenden Oberfläche zu gewährleisten und andererseits diesen Schutz mit einer möglichst geringen Menge von Pulver zu erreichen. Die Ueberwachung der Schichtdicke des aufgetragenen Pulvers ist während der Applikation in den meisten Fällen nicht möglich, da Messgeräte im Auftragungsbereich, in dessen Umgebung mit einigen zehn- bis hunderttausend Volt gearbeitet wird, nicht angeordnet werden können. Zudem existieren keine zuverlässigen Geräte, welche in der Luge sind die Schichtstärke des aufgetragenen Pulvers einwandfrei zu ermitteln und über einen grossen Zeitraum ohne Wartung einwandfrei zu arbeiten. Die obengenannten Probleme treten in können gravierende Folgen haben, wenn das Pulver auf die Innenseite von Schweissnähten an Blechgebinden aufgetragen wird, weil dort einerseits der Applikationsraum nur wenige Kubikzentimeter gross ist und andererseits der Zugang zum Applikationsraum nur über eine mehrere Meter lange Leitung möglich ist. Im weiteren werden die Blechgebinde unmittelbar im Anschluss an die Beschichtung einer Wärmebehandlung zum Aufschmelzen des aufgetragenen Pulvers unterworfen.

Aus der deutschen Offenlegungsschrift 38 09 997 ist ein Verfahren zur Ueberwachung des Pulverstromes in einer Pulveraufbereitungsanlage bekanntgeworden. Bei diesem Verfahren wird mittels eines Mikrophons die Anwesenheit oder Abwesenheit von Pulverteilchen in der Förderleitung überwacht. Das Mikrophon ist dabei an einer Umlenkstelle des Pulverstromes angeordnet, so dass die durch das Aufschlagen der einzelnen von der Förderluft getragenen Pulverteilchen an der Umlenkstelle verursachten Geräusche gemessen und in einer Auswerteelektronik verarbeitet werden können.

Mit diesem bekannten Verfahren kann die Anwesenheit eines Pulverstromes in der Förderleitung einwandfrei festgestellt werden, sofern stets die gleichen Parameter (Pulverkörnung, Fördergeschwindigkeit etc.) vorliegen. Wenn hingegen beispielsweise die Körnung und/oder die chemische Zusammensetzung des Pulvers ändert, so muss dies in der Auswerteelektronik berücksichtigt werden. Im weiteren kann mit dem bekannten Verfahren nur gerade festgestellt werden, ob ein Pulverfluss an der Messstelle vorhanden ist oder nicht; andere Unregelmässigkeiten, z.B. eine Verstopfung der Leitung nach der Messstelle können erst nach Ablauf einer gewissen Zeit, und wenn die Leitung bis zurück zur Messstelle verstopft ist, erfasst werden.

Hier will die Erfindung Abhilfe schaffen. Die Erfindung, wie sie in den Ansprüchen 1 bzw. 2 gekennzeichnet sind, löst die Aufgabe, ein Verfahren und eine Vorrichtung zur Ueberwachung eines Pulverstromes in einer Pulverförderleitung zu schaffen, mit welchem bzw. welcher Aenderungen der geförderten Pulvermenge und/oder Verstopfungen am Ein- und/oder Ausgang des Fördersystemes festgestellt werden können.

Die durch die Erfindung erreichten Vorteile sind im wesentlichen darin zu sehen, dass bei einem Ausbleiben der Zufuhr von fluidisiertem Pulver am Eingang der Transportleitung und/oder bei einem Stau oder Unterbruch der Abgabe von Pulver an der Applikationsstelle, dies von der Auswerteelektronik sofort festgestellt werden kann. Die für die Messung notwendigen Einrichtungen bestehen aus zwei Mikrophonen, deren Signale durch die einfache Auswerteelektronik verarbeitbar sind. Die Anordnung des zweiten Mikrophons direkt am Ausgang des Pulverbehälters und ausserhalb des Störbereiches des Injektors für die Transportluft ermöglicht die Erfassung von Unregelmässigkeiten im Pulverfluss bereits an der Quelle am Ausgang aus dem Transportbehälter.

Anhand eines illustrierten Ansführungsbeispieles wird die Erfindung näher erläutert.

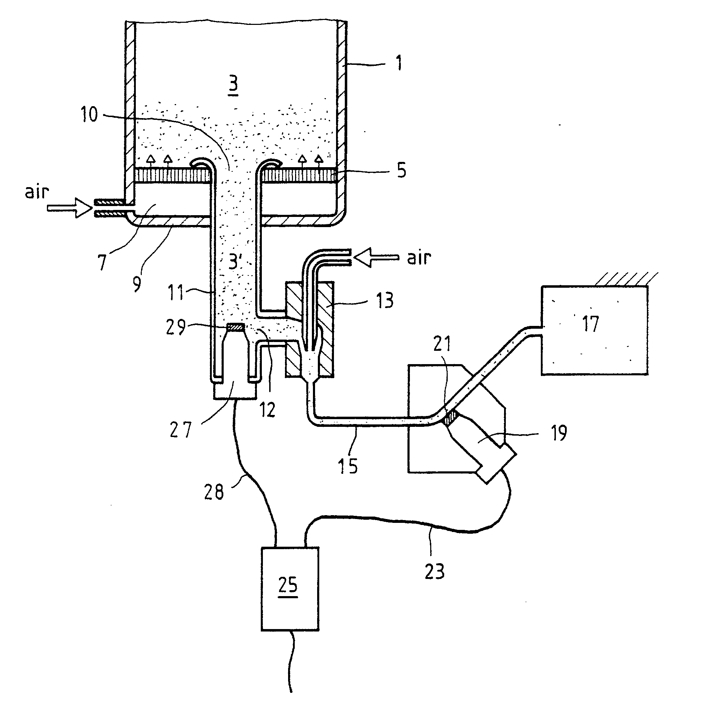

Es zeigt die einzige Figur eine schematische Darstellung des Pulverbehälters einer Pulveraufbereitungsanlage sowie einen Abschnitt der zur Pulverapplikationsstelle führenden Förderleitung.

In der Figur ist der untere Teil eines Pulverbehälters 1 mit darin eingefülltem Pulver 3, schematisch einen Fluidboden 5, durch welchen hindurch feinst verteilte Luft aus einem Zwischenraum 7 zwischen dem porösen Fluidisier- oder Zwischenboden 5 und dem Behälterboden 9 in das Pulver 3 eintreten kann und dieses mindestens im Bereich der Abflussöffnung 10 fluidisiert hält. Anstelle des dargestellten Fluidbodens 5 kann selbstverständlich auch eine andersartig ausgebildete Fluidiservorrichtung treten, welche in der Lage ist, das Pulver 3' in der Umgebung der Abflussöffnung 10 fliessfähig zu halten.

Das fluidisierte Pulver 3' fliesst durch einen rohrförmigen Einlauftrichter 11 auf Grund seines Eigengewichtes nach unten. Der Einlauftrichter 11 ist mit einem Injektor 13 verbunden, mittels welchem durch Einblasen von Luft fluidisiertes Pulver 3' aus dem Einlauftrichter 11 entnommen und durch eine Förderleitung 15 getragen von der Transportluft zu einer in der Figur nur schematisch durch ein Rechteck dargestellten Applikationsvorrichtung 17 geblasen wird. In der Leitung 15, welche den Injektor 13 mit der Applikationsvorrichtung 17 verbindet, ist ein erstes Mikrophon 19 eingebaut. Der Tastkopf 21 dieses Mikrophons 19 befindet sich am Aussenradius eines gebogenen Abschnittes der Förderleitung 15 und ist über eine Leitung 23 mit einer Auswerteelektronik 25 verbunden.

Ein zweites Mikrophon 27 ist im Bereich der Oeffnung 12 des Einlauftrichters 11 angeordnet und durch eine Leitung 8 ebenfalls mit der Auswerteelektronik 25 verbunden. Der Tastkopf 29 des zweiten Mikrophons 27 ist derart angeordnet, dass der Strom des fluidierten Pulvers 3', welcher durch eine Oeffnung 12 entnommen wird, am Tastkopf 29 vorbeifliesst. Die im fluidisierten Pulverstrom kollernden oder rollenden Pulverpartikel erzeugen am Tastkopf 29 des zweiten Mikrophons 27 ein spezifisches Geräusch, welches in Abhängigkeit der Geschwindigkeit der nach unten kollernden Partikel und damit der Menge des Flusses und der durchfliessenden Menge abhängig und folglich je nach der vorbeigleitenden Menge pro Zeiteinheit grösser oder kleiner ist.

Der Tastkopf 21 des ersten Mikrophons 19 erfasst einerseits das Geräusch der die Pulverpartikel tragenden Transportluft und andererseits das Geräusch der auf die Aussenwandung im Bogen der Leitung 15 auftreffenden, in der Transportluft geförderten Pulverpartikel. Es ist dabei zu erwähnen, dass die beiden Geräusche, dasjenige der Luft und dasjenige der Pulverpartikel, nicht immer eindeutig auseinanderzuhalten sind. Dies spielt jedoch in der erfindungsgemässen Anordnung nur eine bescheidene Rolle, da die Aufgabe des ersten Mikrophons einzig darin besteht, festzustellen, ob am Ort des Mikrophons 21 Transportluft durch die Leitung fliesst oder nicht. Die beiden Mikrophone 21 und 27 messen folglich völlig verschiedene Geräusche. Das erste 21 die im Luftstrom mit relativ hoher Geschwindigkeit getragenen, am Rohrbogen aufschlagenden Pulverpartikel und die Luftgeräusche, das zweite 27 die Gräusche der langsam nach unten rutschenden Pulversäule in der die Pulverpartikel oder -körner an der Wandung und an der Mikrophonoberfläche reiben. Die Geräusche der Kollerbewegungen der Partikel werden nicht durch die Geräusche von Transportluft gestört oder überlagert. Die von den Mikrophonen 21 und 27 erfassten Geräusche unterscheiden sich folglich nicht nur bezüglich deren Frequenzen, sondern auch bezüglich deren Intensität. In der Auswerteelektronik 25 werden die von den beiden Mikrophonen 27 und 19 festgestellten und in bekannter Weise in elektrische Ströme umgewandelten Geräusche mit Sollwerten verglichen. Der Vergleich der an den Mikrophonen 27 und 19 erzeugten Geräusche erlaubt es, nun festzustellen, ob in der Leitung Pulver und Luft, nur Luft oder keines von beiden gefördert wird. Weiter kann festgestellt werden, ob die geförderte Menge gleich bleibt, zu-oder abnimmt.

**Patentansprüche**

1. Verfahren zur Ueberwachung eines Pulverstromes in einer Pulverförderleitung (15) zwischen einer Pulveraufbereitungsanlage und einer Pulverapplikationsanlage (17) mit einem Injektor (13) zum Fördern des Pulvers (3') in einem Luftstrom und einem Mikrophon (19) zur Messung der durch die im Luftstrom getragenen Pulverpartikel erzeugten Geräusche, dadurch gekennzeichnet, dass vor dem ersten, in der Pulverförderleitung (15) angeordneten und die vom Pulver/Luftgemisch erzeugten Geräusche erfassenden Mikrophon (19) ein zweites, das Kollergeräusch der ans dem Pulverbehälter (1) der Pulveraufbereitungsanlage ausfliessenden Pulverpartikel (3') messendes Mikrophon (27) angeordnet wird, das mit einer Auswerteelektronik (25) verbunden ist, welche die Signale der beiden in einem Abstand angeordneten Mikrophone (19,27) miteinander vergleicht und ein Signal erzeugt.

2. Vorrichtung zur Ueberwachung eines Pulverstromes in einer Pulverförderleitung (15) zwischen einer Pulveraufbereitungsanlage und einer Pulverapplikationsanlage (17) mit einem Injektor (13) zum Fördern des Pulvers (3') in einem Luftstrom und einem Mikrophon (19) zur Erfassung der durch die im Luftstrom getragenen Pulverpartikel erzeugten Geräusche, dadurch gekennzeichnet, dass in Pulvertransportrichtung vor dem ersten Mikrophon (19) ein zweites Mikrophon (27) angeordnet ist.

3. Vorrichtung nach Anspruch 1, dadurch gekennzeichnet, dass das zweite Mikrophon (27) vor dem Injektor (13) angeordnet ist.

4. Vorrichtung nach Anspruch 3, dadurch gekennzeichnet, dass das zweite Mikrophon (27) am Ausgang eines Pulverbehälters (1) oder im unteren Teil desselben angeordnet ist.

5. Vorrichtung nach einem der Ansprüche 2 bis 4, dadurch gekennzeichnet, dass oberhalb des zweiten Mikrophons (27) eine Fluidisiereinrichtung zum Fluidisieren des Pulvers am Ausgang des Pulverbehälters (12) angeordnet ist.

6. Vorrichtung nach einem der Ansprüche 2 bis 5, dadurch gekennzeichnet, dass das fluidisierte Pulver im Bereich des zweiten Mikrophons (27) umgelenkt wird.